(19)

Europäisches
Patentamt
European
Patent Office
Office européen
des brevets

(11) **EP 4 253 091 A1**

(12) **EUROPEAN PATENT APPLICATION**

(43) Date of publication:
**04.10.2023 Bulletin 2023/40**

(21) Application number: **23158318.8**

(22) Date of filing: **23.02.2023**

(51) International Patent Classification (IPC):
***B60C 11/03*** (2006.01)        ***B60C 11/12*** (2006.01)

(52) Cooperative Patent Classification (CPC):
**B60C 11/0304; B60C 11/0306; B60C 11/12;
B60C 11/1236; B60C 11/1272;** B60C 2011/0341;
B60C 2011/0344; B60C 2011/0348;
B60C 2011/0358; B60C 2011/036;
B60C 2011/0365; B60C 2011/0372;
B60C 2011/0376; B60C 2011/1209

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.03.2022 JP 2022054343**

(71) Applicant: **Sumitomo Rubber Industries, Ltd.
Kobe-shi, Hyogo 651-0072 (JP)**

(72) Inventors:
• **YUAN, Suxiang
Kobe-shi, 651-0072 (JP)**

• **SANAE, Ryuhei
Kobe-shi, 651-0072 (JP)**
• **MIYAZAWA, Ken
Kobe-shi, 651-0072 (JP)**
• **SASAKI, Tatsuya
Kobe-shi, 651-0072 (JP)**
• **OISHI, Naoto
Kobe-shi, 651-0072 (JP)**

(74) Representative: **Manitz Finsterwald
Patent- und Rechtsanwaltspartnerschaft mbB
Martin-Greif-Strasse 1
80336 München (DE)**

(54) **TIRE**

(57)     A tread portion includes land portions divided by circumferential grooves. The land portions are provided with a set of lateral groove-shaped elements inclined with respect to tire axial and circumferential directions. Each lateral groove-shaped elements includes a circumferential first and second ends. The set of lateral groove-shaped elements is arranged in a first array over an entire circumference of the tire. The first array is such that in each of all pairs of two lateral groove-shaped elements adjacent to each other in the tire circumferential direction of the lateral groove-shaped elements, the first end of one of the two lateral groove-shaped elements is located at a circumferential same position as the second end of the other one of the two lateral groove-shaped elements. Two lateral groove-shaped elements included in at least one pair of the all pairs are formed on different land portions from one another.

EP 4 253 091 A1

**Description**

RELATED APPLICATIONS

This application claims the benefit of foreign priority to Japanese Patent Application No. JP2022-054343, filed March 29, 2022, which is incorporated by reference in its entirety.

FIELD OF THE INVENTION

The present invention relates to a tire.

BACKGROUND OF THE INVENTION

In general, tread portions of tires are provided with sipes or lateral grooves extending in the tire axial direction from the viewpoint of drainage performance (for example, see Patent Document 1 below). On the other hand, sipes and lateral grooves generate various noises during driving.

PATENT DOCUMENT

Patent document 1
Japanese Unexamined Patent Application Publication 2020-168946

SUMMARY OF THE INVENTION

In recent years, as automobiles have become more quieter, there has been a demand for further improvement in noise performance of tires, and it is necessary to reduce running noise caused by sipes and lateral grooves.
The present invention has been made in view of the above circumstances and has a major object to provide a tire capable of improving noise performance.
In one aspect of the present invention, a tire includes a tread portion including a plurality of circumferential grooves extending continuously in a tire circumferential direction and a plurality of land portions divided by the plurality of circumferential grooves. The plurality of land portions is provided with at least one set of a plurality of lateral groove-shaped elements inclined with respect to a tire axial direction and the tire circumferential direction. Each of the plurality of lateral groove-shaped elements includes a first end located on a first side in the tire circumferential direction and a second end located on a second side in the tire circumferential direction. The at least one set of the plurality of lateral groove-shaped elements is arranged in a first array over an entire circumference of the tire. The first array is such that in each of all pairs of two lateral groove-shaped elements adjacent to each other in the tire circumferential direction of the plurality of lateral groove-shaped elements, the first end of one of the two lateral groove-shaped elements is located at a same position in the tire circumferential direction as the second end of the other one of the two lateral groove-shaped elements. Two lateral groove-shaped elements included in at least one pair of the all pairs are formed on different land portions from one another.

BRIEF DESCRIPTION OF THE DRAWINGS

FIG. 1 is a development view of a tread portion of a tire in accordance with an embodiment of the present invention;
FIG. 2 is an enlarged view of a first land portion and a second land portion of FIG. 1;
FIG. 3 is an enlarged view of the first land portion and the second land portion showing another example;
FIG. 4 is an enlarged view of the first land portion and the second land portion showing yet another example;
FIG. 5 is an enlarged view of the first land portion and the second land portion showing yet another example;
FIG. 6 is an enlarged view of the first land portion and the second land portion showing yet another example;
FIG. 7 is an enlarged view of the first land portion and the second land portion showing yet another example;
FIG. 8 is an enlarged view of the first land portion and the second land portion showing yet another example;
FIG. 9 is an enlarged view of the first land portion, the second land portion and a third land portion showing yet another example;
FIG. 10 is an enlarged view of the first land portion, the second land portion, and the third land portion showing yet another example;
FIG. 11 is an enlarged view of the first land portion and the second land portion showing yet another example;

FIG. 12 is an enlarged view of the first land portion and the second land portion showing yet another example; and

FIG. 13 is a development view of a tread portion showing a ground contact patch thereof.

DETAILED DESCRIPTRION OF THE INVENTION

Some embodiments of the present invention will be described below based on the drawings.

Note that the drawings may contain exaggerated expressions or expressions that differ from the dimensional ratios of actual structures in order to aid understanding of the present invention. In addition, throughout the embodiments, the same or common elements are denoted by the same reference numerals, and overlapping explanations are omitted.

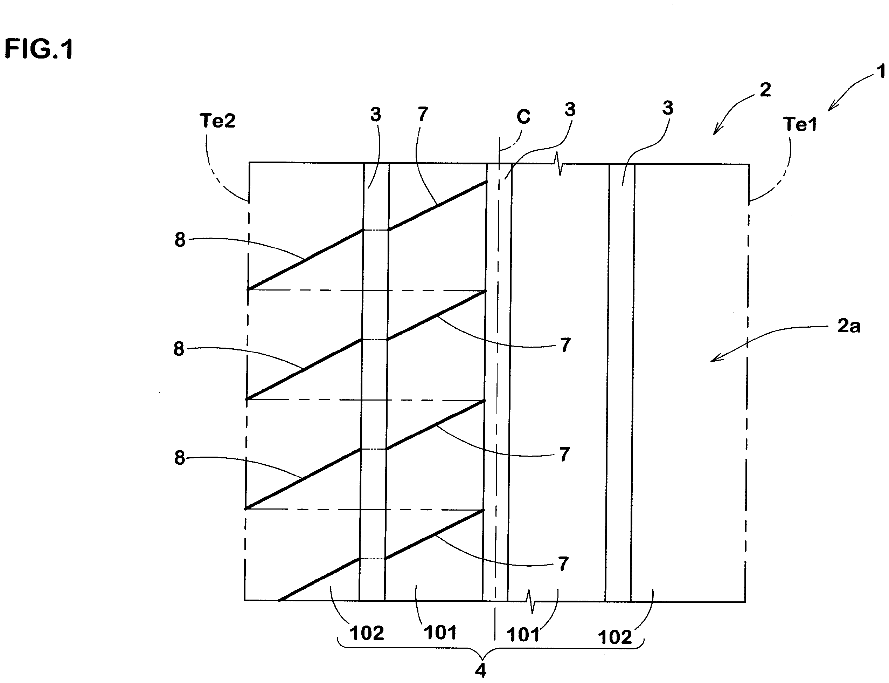

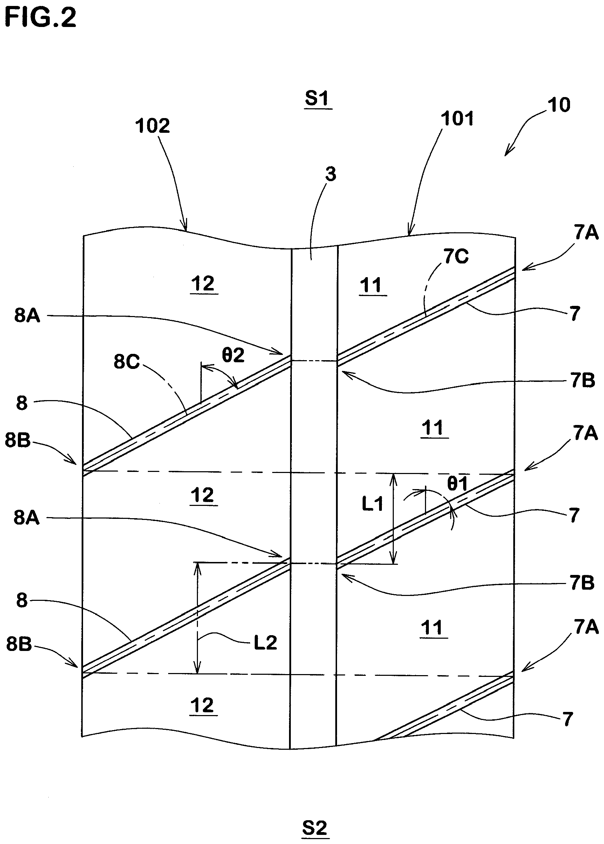

FIG. 1 is a partial development of a tread portion 2 of a tire 1 of the present embodiment, and FIG. 2 is an enlarged view of a main part of FIG. 1. As the tire according to the present embodiment, a pneumatic tire is exemplified. For example, as a pneumatic tire, a passenger car tire may be suitable, especially a pneumatic radial tire for passenger car. The present invention may also be embodied as a motorcycle tire or a heavy-duty tire.

In FIG. 1, the tire 1 is under a normal state. As used herein, the "normal state" of the tire 1 is such that the tire 1 is mounted onto a standard wheel rim with a standard pressure but loaded with no tire load. Unless otherwise noted, dimensions of portions of the tire 1 are values measured under the normal state.

As used herein, the "standard wheel rim" is a wheel rim officially approved for each tire by standards organizations on which the tire is based, wherein the standard wheel rim is the "standard rim" specified in JATMA, the "Design Rim" in TRA, and the "Measuring Rim" in ETRTO, for example.

As used herein, the "standard pressure" is a standard pressure officially approved for each tire by standards organizations on which the tire is based, wherein the standard pressure is the "maximum air pressure" in JATMA, the maximum pressure given in the "Tire Load Limits at Various Cold Inflation Pressures" table in TRA, and the "Inflation Pressure" in ETRTO, for example.

As illustrated in FIG. 1, the tread portion 2 includes a first tread edge Te1, a second tread edge Te2, and a ground contact surface 2a therebetween. The ground contact surface 2a is a portion that is intended to be in contact with the ground and is formed by tread rubber. The first tread edge Te1 and the second tread edge Te2 are the axial outermost edges of the ground contact patch of the tire 1 which occurs under the condition such that the tire 1 under a normal loaded state.

As used herein, the "normal loaded state" is the condition in which the tire 1 is loaded with a standard tire load and is in contact with a flat surface at a zero camber angles. In addition, the "standard tire load" is a tire load officially approved for each tire by the standards organization in which the tire is based, wherein the standard tire load is the "maximum load capacity" in JATMA, the maximum value given in the above-mentioned table in TRA, and the "Load Capacity" in ETRTO, for example.

The tread portion 2, for example, is provided with a plurality (e.g., three) of circumferential grooves 3 extending in the tire circumferential direction. In the present embodiment, the circumferential grooves 3, for example, extend straight in parallel with the tire circumferential direction. Although not particularly limited, a width of the circumferential grooves 3, for example, is preferably greater than 2 mm, more preferably equal to or more than 3mm, still further preferably equal to or more than 4 mm, in order to ensure sufficient drainage during wet driving. Similarly, a groove depth of the circumferential grooves 3, for example, is preferably equal to or more than 3 mm, preferably equal to or more than 4 mm, still further preferably equal to or more than 5 mm.

The tread portion 2 includes a plurality of land portions 4 sectioned by the circumferential grooves 3. In the present embodiment, the land portions 4 include a pair of first land portions 101, and a pair of second land portions 102 arranged outwardly in the tire axial direction of the pair of first land portions 101. In the present embodiment, the first land portions 101 form a crown region of the tread portion 2, and the pair of second land portions 102 forms a pair of shoulder regions of the tread portion 2. In FIG. 1, note that the tire equator is denoted by reference "C".

In the present embodiment, as a plurality of land portions 4, one of the first land portions 101 and one of the second land portions 102 are provided with a plurality of lateral groove-shaped elements. Hereinafter, the lateral groove-shaped elements formed on the first land portion 101 will be referred to as "first lateral groove-shaped elements 7", and the lateral groove-shaped elements formed on the second land portion 102 will be referred to as "second lateral groove-shaped elements 8" to distinguish them from each other. The first lateral groove-shaped elements 7 and the second lateral groove-shaped elements 8 may be collectively referred to as "lateral groove-shaped elements" without any particular reference numerals.

The first lateral groove-shaped elements 7 and the second lateral groove-shaped elements 8 are inclined with respect to the tire axial direction and the tire circumferential direction. Thus, in this embodiment, each of the first lateral groove-shaped elements 7 and the second lateral groove-shaped elements 8 has a non-zero angle with respect to both the tire axial and circumferential directions.

As illustrated in FIG. 2, each of the first lateral groove-shaped elements 7 includes a first end 7A located on a first side S 1 in the tire circumferential direction and a second end 7B located on a second side S2 in the tire circumferential direction. Similarly, each of the second lateral groove-shaped elements 8 includes a first end 8A located on the first side S 1 in the tire circumferential direction and a second end 8b located on the second side S2 in the tire circumferential direction.

As used herein, the first lateral groove-shaped elements 7 and the second lateral groove-shaped elements 8 are voids recessed from the ground contact surface of the land portions 4, for example, and mean an inclusive concept that includes both sipes and grooves. In the present embodiment of FIG. 1 and FIG. 2, the first lateral groove-shaped elements 7 and the second lateral groove-shaped elements 8 are shown as a plurality of sipes. Alternatively, the first lateral groove-shaped elements 7 and the second lateral groove-shaped elements 8 may be formed as a plurality of grooves having a groove width greater than sipes.

As used herein, "sipe" means a slit-shaped void having a width of equal to or less than 2 mm, preferably equal to or less than 1.5 mm, orthogonal to the longitudinal direction thereof. Such a sipe, for example, can function such that at least a part of a pair of sipe walls contact with each other when the sipe is grounded under the normal loaded state. Thus, the sipes can help to minimize the rigidity reduction of the first land portion 101 and the second land portion 102, consequently, to improve the steering stability.

As used herein, "groove" means a void having a length in a longitudinal direction thereof and a groove width greater than 2 mm orthogonal to the longitudinal direction. The maximum width of the grooves is not limited, but in the case of tires for passenger car, for example, it may be equal to or less than 10 mm. Such a groove can help to improve drainage.

In the present embodiment, the first lateral groove-shaped elements 7 and the second lateral groove-shaped elements 8 form a set of lateral groove-shaped elements that is arranged in a first array 10 over an entire circumference of the tire. In an example of FIG. 1, a single set of the first array 10 is provided over the two land portions of the first land portion 101 and the second land portion 102.

In the present invention, the first array 10 satisfies the following two conditions (a) and (b):

(a) in each of all pairs of two lateral groove-shaped elements adjacent to each other in the tire circumferential direction of the plurality of lateral groove-shaped elements, the first end of one of the two lateral groove-shaped elements is located at the same position in the tire circumferential direction as the second end of the other one of the two lateral groove-shaped elements; and
(b) in at least one pair of all pairs, the two lateral groove-shaped elements are formed on different land portions from one another.

The conditions (a) and (b) are described in more detail below. In the example of FIG. 2, for example, the pair of one of the first lateral groove-shaped elements 7 located at the top and one of the second lateral groove-shaped elements 8 located at the top is identified as "Pair 1". In pair 1, the second end 7B of the first lateral groove-shaped element 7 is located at the same position in the tire circumferential direction as the first end 8A of the second lateral groove-shaped element 8 (see shorter imaginary line parallel to the tire axial direction). Thus, Pair 1 satisfies the condition (a). In addition, the first lateral groove-shaped element 7 and the second lateral groove-shaped elements 8 included in Pair 1 are formed on different land portions from one another. Thus, Pair 1 also satisfies the condition (b).

Next, for example, the pair of the first lateral groove-shaped element 7 that is the second from the top and the second lateral groove-shaped element 8 that is located at the top are identified as "pair 2". In Pair 2, the second end 8B of the second lateral groove-shaped element 8 is located at the same position in the tire circumferential direction as the first end 7A of the first lateral groove-shaped element 7 (see longer imaginary line parallel to the tire axial direction). Thus, Pair 2 satisfies the condition (a). In addition, the first lateral groove-shaped element 7 and the second lateral groove-shaped elements 8 included in Pair 2 are formed on different land portions from one another. Thus, Pair 2 also satisfies the condition (b).

In the example of FIG. 2, Pairs 1 and 2 are repeated alternately in the tire circumferential direction. Thus, in the first array 10 of the example shown in FIG. 2, the lateral groove-shaped elements 7 and 8 included in each pair are formed on different land portions.

Here, whether the first end and the second end of two lateral groove-shaped elements are located at the same position in the tire circumferential direction or not is determined by using their centerlines. In FIG. 2, the centerlines are indicated by the centerlines 7C of the first lateral groove-shaped elements 7 and the centerlines 8C of the second lateral groove-shaped elements 8. That is, the first ends and the second ends of the first lateral groove-shaped elements 7 and the second lateral groove-shaped elements 8 are specified by the ends of the centerlines 7C and 8C, respectively. However, considering the characteristics of vulcanized rubber products such as tires, the above-mentioned "same position" includes a mode in which the two ends are displaced by a small distance in the tire circumferential direction so that manufacturing errors can be tolerated. In this case, the distance is equal to or less than 5%, preferably equal to or less than 3%, more preferably equal to or less than 1%, of the sum (L1 + L2) of a length L1 in the tire circumferential direction of the centerline 7C of one first lateral groove-shaped element 7 and a length L2 in the tire circumferential direction of the centerline 8C of one second lateral groove-shaped element 8. Most preferably, the first and second ends are not displaced in the tire circumferential direction.

Pitch noise is known as a noise that occurs when tires are running. An impact force is generated every time the land elements 11 and 12 divided by the first lateral groove-shaped elements 7 and the second lateral groove-shaped elements 8 come into contact with the ground. The repeated impact force causes the tread portion 2 and the sidewall (not shown) to vibrate periodically, resulting in pitch noise. However, the first array 10 described above can reduce the fluctuation of the above impact force because the first lateral groove-shaped elements 7 and the second lateral groove-shaped elements 8 are continuously and alternately grounded when the tire is running. Thus, the tire 1 according to the present embodiment can improve noise performance by reducing pitch noise generated by the first land portion 101 and the second land portion 102.

Although not particularly limited, in order to enhance the above-mentioned effect, it is preferable that the first land portion 101 and the second land portion 102 are provided with only the first lateral groove-shaped elements 7 and the second lateral groove-shaped elements 8 that form the first array 10, as depicted in FIG. 1.

In the example of FIG. 1 and FIG. 2, each pair (Pair 1 and Pair 2) consists of one first lateral groove-shaped element 7 and one second lateral groove-shaped element 8 that are inclined in the same direction (e.g., extending up to right) with each other with respect to the tire circumferential direction.

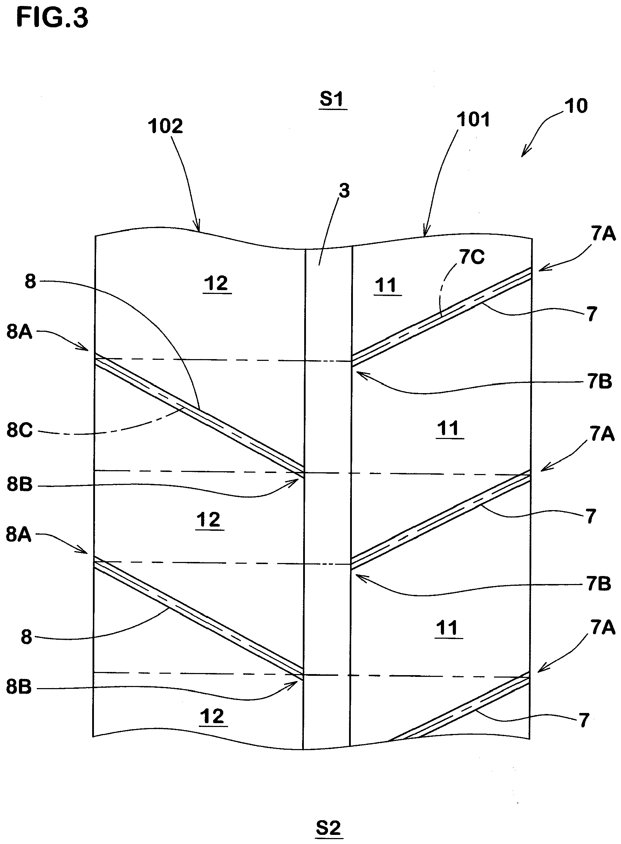

As illustrated in FIG.3, each pair may include one first lateral groove-shaped element 7 and one second lateral groove-shaped element 8 inclined in opposite directions from one another with respect to the tire circumferential direction.

Referring back to FIG. 2, an angle θ1 of the first lateral groove-shaped elements 7 with respect to the tire circumferential direction and an angle Θ2 of the second lateral groove-shaped elements 8 with respect to the tire circumferential direction are not particularly limited, but from the viewpoint of improving steering stability, for example, they may be set to be equal to or more than 40 degrees, more preferably equal to or more than 50 degrees, still further preferably equal to or more than 60 degrees. The upper limit of the angles θ1 and θ2 are preferably less than 90 degrees, more preferably equal to or less than 85 degrees, still further preferably equal to or less than 80 degrees. In this embodiment, the angle θ1 and the angle θ2 are equal to each other (θ1 = θ2). Alternatively, the angle θ1 may be different from the angle Θ2.

Preferably, at least one of the plurality of lateral groove-shaped elements extends to traverse the land portion completely in the tire axial direction. In the example of FIG. 2, the first lateral groove-shaped elements 7 extend to traverse the first land portion 101 completely in the tire axial direction. Similarly, the second lateral groove-shaped elements 8 extend to traverse the second land portion 102 completely in the tire axial direction. In such an embodiment, the first land portion 101 and the second land portion 102 can provide excellent drainage.

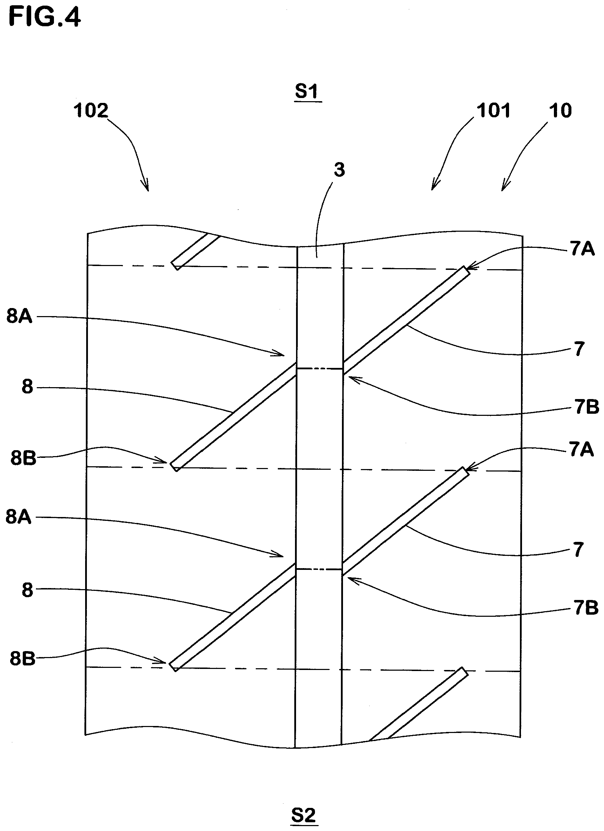

In another example, at least one of the lateral groove-shaped elements may include at least one of the first end and the second end terminating within the land portion. For example, as shown in FIG. 4, each of the first lateral groove-shaped elements 7 may have at least one of the first end 7A and the second end 7B terminating within the first land portion 101. In the example of FIG. 4, each of the first lateral groove-shaped elements 7 has the first end 7A terminating within the first land portion 101 and the second end 7B in communication with the circumferential groove 3. Similarly, each of the second lateral groove-shaped elements 8 may have at least one of the first end 8A and the second end 8B terminating within the second land portion 102. In the example of FIG. 4, each of the second lateral groove-shaped elements 8 has the second end 8B terminating within the second land portion 102 and the first end 8A in communication with the circumferential groove 3. In this manner, the rigidity reduction of the first land portion 101 and the second land portion 102 can be minimized and the steering stability can be improved.

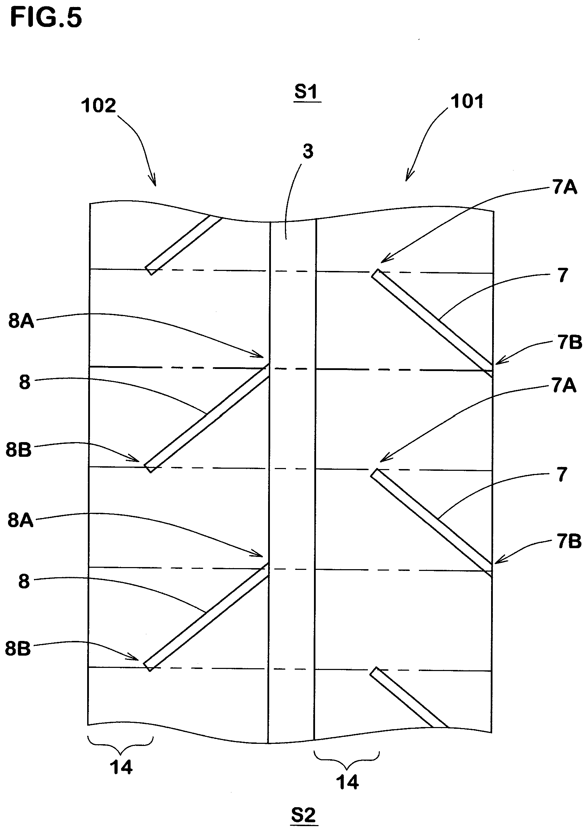

FIG. 5 illustrates yet another example. FIG. 5 differs from FIG. 4 in that the direction of inclination of the first lateral groove-shaped element 7 is reversed. FIG. 5 also differs from FIG. 4 in that the second ends 7B of the first lateral groove-shaped elements 7 are in communication with the circumferential groove 3 on the opposite side of the second land portion 102. In this example, on one side of the tire axial direction (left side in FIG. 5) of the first land portion 101 and the second land portion 102, a circumferential continuous rib element 14 can be formed. Preferably, such a configuration may be applied to a tire with a specified orientation for mounting on a vehicle, and be configured such that the second land portion 102 side is to be located on the outside of the vehicle when mounted on the vehicle. This can further improve the steering stability. In order to improve steering stability, a width of the rib element 14 in the tire axial direction is equal to or more than 20%, preferably from 25% to 50%, of the width in the tire axial direction of the first land portion 101.

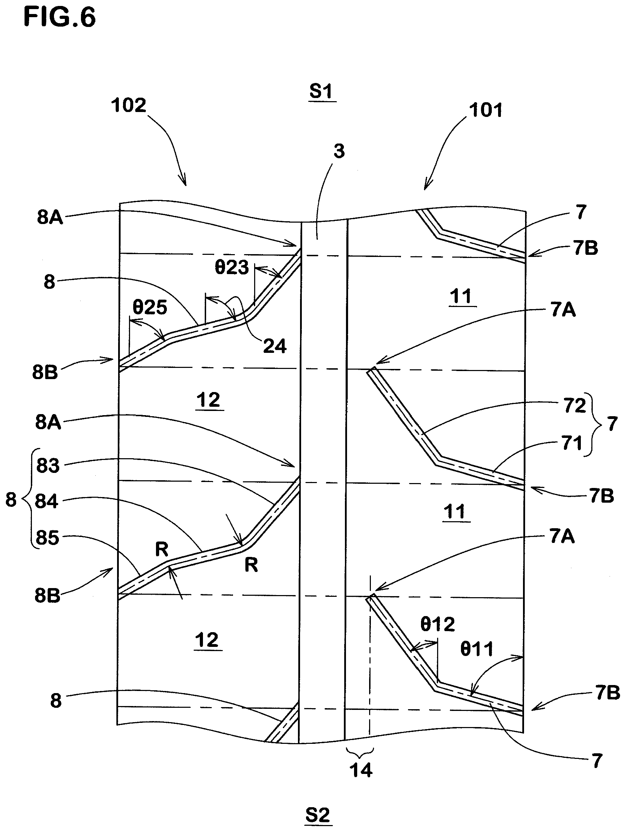

FIG. 6 illustrates yet another example. The example of FIG. 6 differs from the above example in that the first lateral groove-shaped elements 7 and/or the second lateral groove-shaped elements 8 extend non-linearly.

For example, each of the first lateral groove-shaped elements 7 includes a first inclined portion 71 extending in a straight line, and a second inclined portion 72 extending in a straight line, and which are connected with each other so as to form a bend portion. In the present embodiment, the first inclined portion 71 includes the second end 7B, and the second inclined portion 72 includes the first end 7A. The first end 7A terminates within the first land portion 101. As a result, the first land portion 101 can form a rib element 14 continuously extending in the tire circumferential direction on the left side of the first end 7A.

An angle θ11 of the first inclined portion 71 with respect to the tire circumferential direction is greater than an angle θ12 of the second inclined portion 72 with respect to the tire circumferential direction. As to the angle of the lateral groove-shaped elements with respect to the tire circumferential direction, the larger angle works to the advantage of steering stability. In addition, when cornering of the tire, force that acts on the edges of the land portions tends to increase. In this embodiment, since the angle θ11 of the first inclined portions 71 located on one of the edges of the first land portion 4 is greater than the angle θ12 of the second inclined portions 72, the steering stability can be improved further. Moreover, uneven wear can be suppressed near the edge of the first land portion 101 where the first inclined portions 71 are open. Furthermore, by bending the first lateral groove-shaped elements 7 as described above, adjacent land elements 11 can easily engage with each other when the tire is running. This can help further improve the steering stability. Further, the second inclined portion 72, which has a steeper slope, can help reduce the impact force when coming into contact with the ground.

In order to enhance the above-mentioned effect, the angle θ11 of the first inclined portions 71 with respect to the tire circumferential direction is, for example, equal to or more than 50 degrees, preferably equal to or more than 60 degrees. The upper limit of the angle θ11 is not limited as long as less than 90 degrees, but preferably equal to or less than 85 degrees, more preferably equal to or less than 80 degrees. Similarly, the angle θ12 of the second inclined portion 72 with respect to the tire circumferential direction is, for example, equal to or more than 20 degrees, preferably equal to or more than 30 degrees, but preferably equal to or less than 70 degrees, more preferably equal to or less than 60 degrees.

For example, the second lateral groove-shaped elements 8 extend to traverse the second land portion 102 completely in the tire axial direction. In the present embodiment, each of the second lateral groove-shaped elements 8 includes a third inclined portion 83, a fourth inclined portion 84, and a fifth inclined portion 85, and these inclined portions extend in a straight line. The third inclined portion 83 is a portion including the first end 8A. The fifth inclined portion 85 is a portion including the second end 8B. The fourth inclined portion 84 is a portion located between the third inclined portion 83 and the fifth inclined portion 85. In the present embodiment, the third inclined portion 83, the fourth inclined portion 84, and the fifth inclined portion 85 are connected with each other to form a bend portion therebetween. In a preferred aspect, each bent portion may be formed by an arc portion with a radius of curvature R.

In the present embodiment, an angle θ23 of the third inclined portion 83 with respect to the tire circumferential direction and an angle θ25 of the fifth inclined portion 85 with respect to the tire circumferential direction are smaller than an angle θ24 of the fourth inclined portion 84 with respect to the tire circumferential direction. This allows the land elements 12 of the second land portion 102 to engage and support with each other effectively when cornering. In addition, since each the second lateral groove-shaped elements 8 has the fourth inclined portion 84 with a relatively large angle, the reduction of the lateral rigidity of the land portion elements 12 can be suppressed. Thus, the second land portion 102 of the present embodiment can help to provide excellent steering stability.

In order to enhance the above-mentioned effect, the angle θ23 of the third inclined portions 83 with respect to the tire circumferential direction and the angle θ25 of the fifth inclined portions 85 with respect to the tire circumferential direction are, for example, equal to or more than 20 degrees, preferably equal to or more than 30 degrees, but preferably equal to or less than 80 degrees, more preferably equal to or less than 70 degrees. Similarly, the angle θ24 of the fourth inclined portion 84 with respect to the tire circumferential direction is, for example, equal to or mor than 50 degrees, preferably equal to or more than 60 degrees, but preferably equal to or less than 85 degrees, more preferably equal to or less than 80 degrees. In some preferred aspects, the angles of the adjacent inclined portions of these five inclined portions preferably alternate between large and small, taking into account the order of coming into contact with the ground. In other words, the following is preferably satisfied:

$$\theta 12 < \theta 11;$$

$$\theta 11 > \theta 23;$$

$$\theta 23 < \theta 24;$$

and

$$\theta 24 > \theta 25.$$

Thus, the noise frequencies caused by the first lateral groove-shaped elements 7 and the second lateral groove-shaped

**EP 4 253 091 A1**

elements 8 are dispersed over a wide frequency band, which can further improve the noise performance.

The example of FIG. 6 exemplifies bending grooves as non-linear lateral groove-shaped elements. In another example, the lateral groove-shaped elements can be curved grooves with continuously changing angles or combined grooves of such curved grooves and straight grooves.

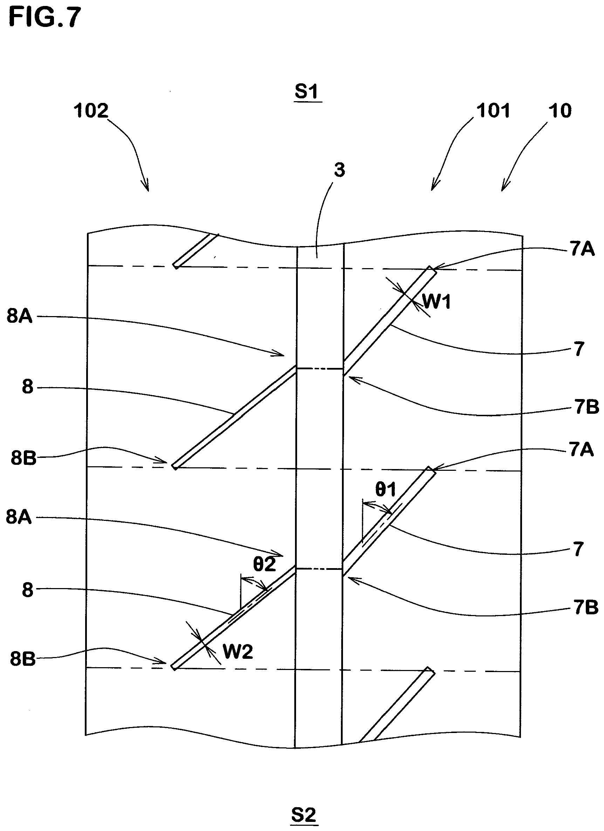

FIG. 7 illustrates yet another example of the first array 10. In the example of FIG. 7, the lateral groove-shaped elements include the first lateral groove-shaped elements 7 and the second lateral groove-shaped elements 8. An angle of one of the groove groups of the first lateral groove-shaped elements 7 and the second lateral groove-shaped elements 8 with respect to the tire circumferential direction is greater than an angle of the other one of the groove groups of the first lateral groove-shaped elements 7 and the second lateral groove-shaped elements 8 with respect to the tire circumferential direction. In addition, a groove width (a sipe width) of the one of the groove groups of the first lateral groove-shaped elements 7 and the second lateral groove-shaped elements 8 is smaller than a groove width (a sipe width) of the other one of the groove groups. In the example of FIG. 7, an angle θ2 of the second lateral groove-shaped elements 8 is greater than an angle θ1 of the first lateral groove-shaped elements 7, and a groove width (a sipe width) W2 of the second lateral groove-shaped elements 8 is smaller than a groove width (a sipe width) W1 of the first lateral groove-shaped elements 7. In such an aspect, opening widths of the lateral groove-shaped elements 7 and the second lateral groove-shaped elements 8 tend to be similar or equal to each other in a cross-section of the land portions 101 and 102 perpendicular to the ground contact surfaces of the land portions and parallel to the tire axial direction. This can help further reduce the variation of the impact force when the tire is running and to further improve the noise performance.

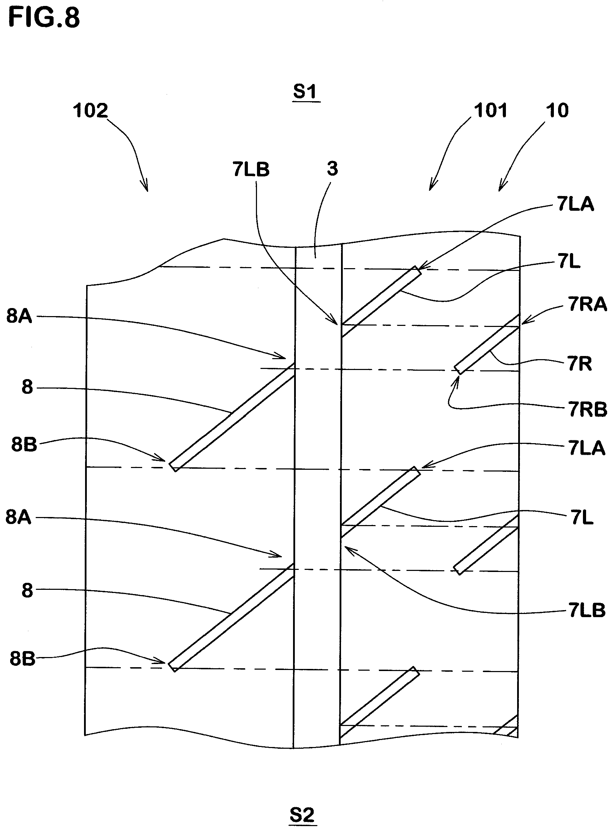

FIG. 8 illustrates yet another embodiment of the first array 10. In the example of FIG. 8, two lateral groove-shaped elements included in at least one pair of the pairs of the lateral groove-shaped elements adjacent to each other in the tire circumferential direction are formed on the same land portion as each other. For example, the first land portion 101 is provided with a plurality of first right-side lateral groove-shaped elements 7R and a plurality of first left-side lateral groove-shaped elements 7L that are arranged alternately in the tire circumferential direction, as the first lateral groove-shaped elements 7. The second land portion 102 is provided with the second lateral groove-shaped elements 8 described in FIG. 4.

The first array 10 in this example includes three kinds of pairs of the lateral groove-shaped elements, Pair 1, Pair 2 and Pair 3, which are adjacent to each other in the tire circumferential direction.

For example, Pair 1 includes the first left-side lateral groove-shaped element 7L depicted uppermost in the first land portion 101, and the first right-side lateral groove-shaped element 7R adjacent it on the second side S2 in the tire circumferential direction. In Pair 1, the second end 7LB of the first left-side lateral groove-shaped element 7L and the first end 7RA of the first right-side lateral groove-shaped element 7R are located at the same position in the tire circumferential direction. Thus, the two lateral groove-shaped elements included in Pair 1 are formed on the same land portion (i.e., the first land portion 101).

Pair 2 follows the second side S2 of Pair 1. For example, Pair 2 includes the first right-side lateral groove-shaped element 7R that depicted at the top of the first right-side lateral groove-shaped elements 7R of the first land portion 101, and the second lateral groove-shaped element 8 adjacent to it on the second side S2. In Pair 2, the second end 7RB of the first right-side lateral groove-shaped element 7R and the first end 8A of the second lateral groove-shaped element 8 are located at the same position in the tire circumferential direction. Thus, the two lateral groove-shaped elements included in Pair 2 are formed on different land portions (i.e., the first land portion 101 and the second land portion 102).

Pair 3 follows the second side S2 of Pair 2. For example, Pair 3 includes the second lateral groove-shaped element 8 of the second land portion 102 and the first left-side lateral groove-shaped elements 7L adjacent it on the second side S2. In Pair 3, the second end 8B of the second lateral groove-shaped element 8 and the first end 7LA of the first left-side lateral groove-shaped element 7L are located at the same position in the tire circumferential direction. Thus, the two lateral groove-shaped elements included in Pair 3 are formed on different land portions (i.e., the first land portion 101 and the second land portion 102) from each other.

Thus, two lateral groove-shaped elements included in at least one pair of the pairs of the first array 10 may be formed on the same land portion as each other, and this example can also offer the effect as described above. In the example of FIG.8, two kinds of pairs of the lateral groove-shaped elements are provided on the first land portion 101. Alternatively, or in addition to this, the second land portion 102 may be provided with two kinds of pairs of the lateral groove-shaped elements. Further, three or more kinds of pairs of the lateral groove-shaped elements may be provided on one land portion.

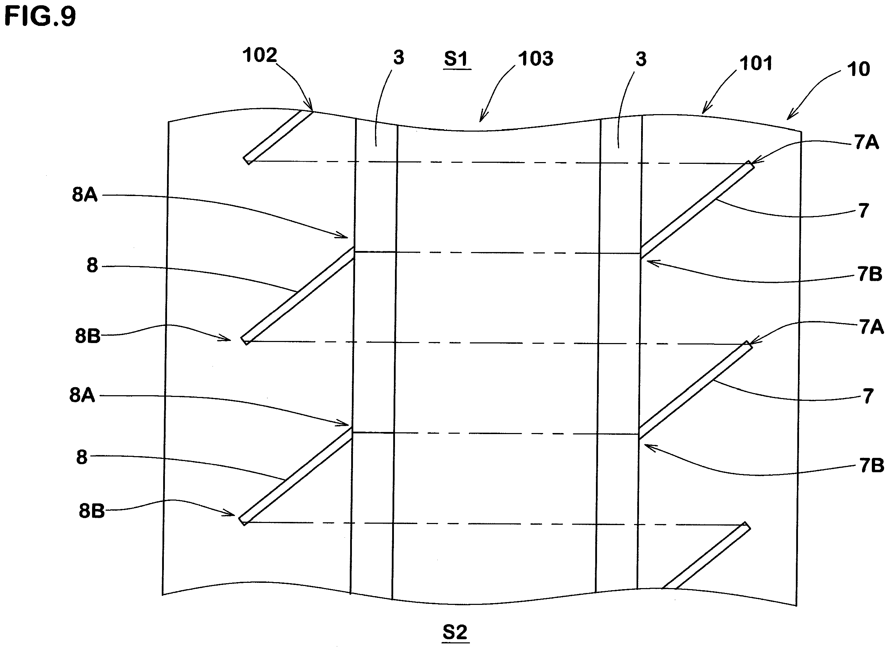

FIG. 9 illustrates yet another example of the first array 10. The example of FIG. 9 differs from the above examples in that the lateral groove-shaped elements forming the first array 10 are provided on two land portions, and two or more circumferential grooves 3 are arranged between the two land portions. That is, in the previous examples of the first array 10, the first land portion 101 and the second land portion 102 are adjacent to each other via a single circumferential groove 3. In contrast, in the example of FIG. 9, two or more circumferential grooves 3 may be arranged between the first land portion 101 and the second land portion 102. For example, a third land portion 103 is located between the first land portion 101 and the second land portion 102. The third land portion 103 is a continuous rib in the tire circumferential direction. The third land portion 103 may be, for example, a plain rib without grooves or sipes.

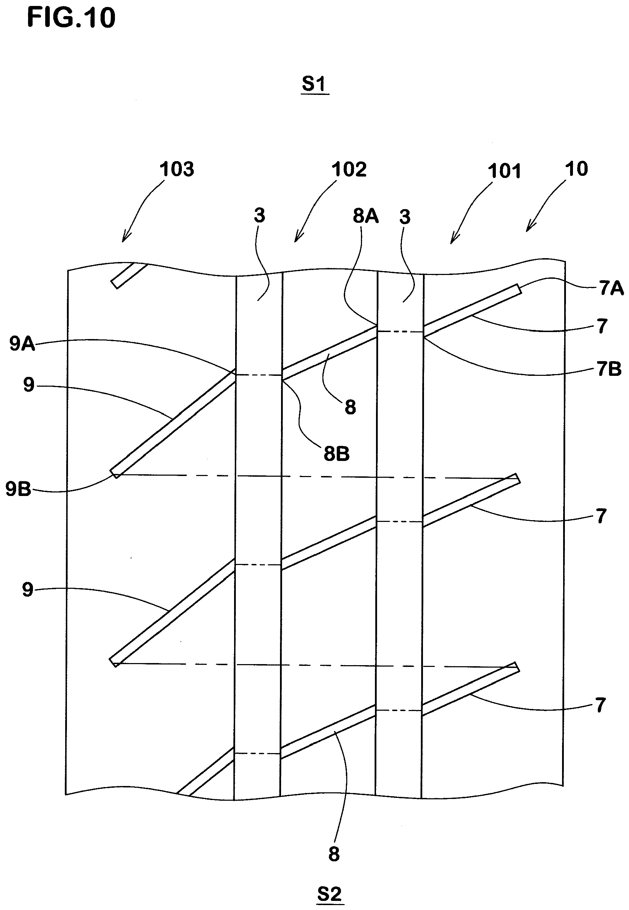

FIG. 10 illustrates yet another example of the first array 10. As the example of FIG. 10, the lateral groove-shaped elements forming the first array 10 are provided over three or more land portions of the plurality of land portions. In the example of FIG. 10, the first array 10 is distributed over three land portions, e.g., the first land portion 101, the second land portion 102 and the third land portion 103. The third land portion 103 is provided with a plurality of third lateral groove-shaped elements 9 spaced in the tire circumferential direction, as some of the set of the plurality of lateral groove-shaped elements. The first array 10 includes three kinds of pairs, e.g., Pair 1, Pair 2, and Pair 3. In this example, Pair 1 includes one first lateral groove-shaped element 7 and one second lateral groove-shaped element 8, which are adjacent to each other in the tire circumferential direction. Pair 2 is located on the second side S2 of Pair 1 and includes one second lateral groove-shaped element 8 and one third lateral groove-shaped element 9, which are adjacent to each other in the tire circumferential direction. Pair 3 is located on the second side S2 of Pair 2 and includes one third lateral groove-shaped element 9 and one first lateral groove-shaped element 7, which are adjacent to each other in the tire circumferential direction. Two lateral groove-shaped elements included in each of these pairs are formed on different land portions. Alternatively, the lateral groove-shaped elements of the first array 10 may be distributed over four or more land portions.

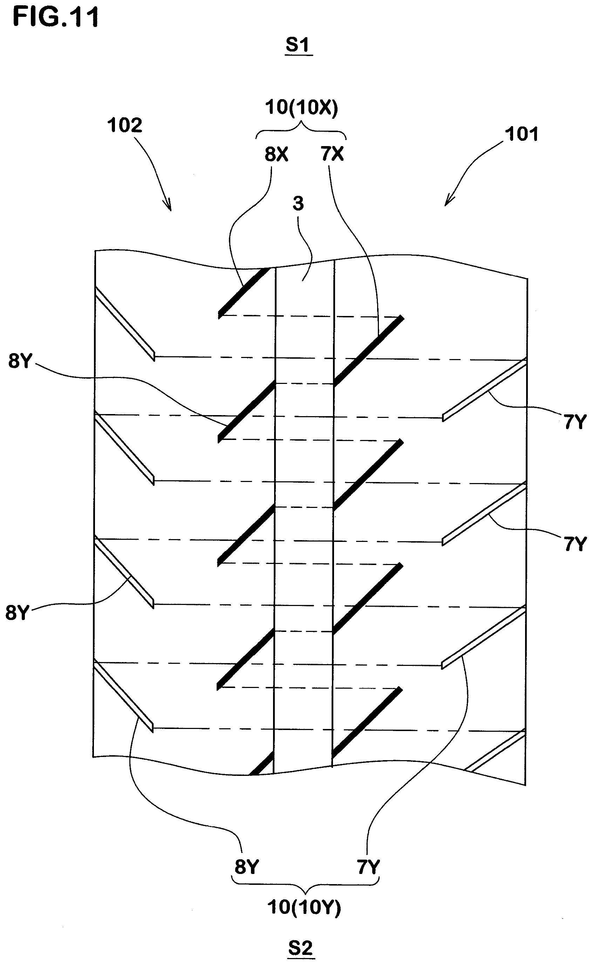

FIG. 11 illustrates another embodiment of the present invention. In this embodiment, a plurality of sets of the first arrays 10 are formed in the first land portion 101 and the second land portion 102. For example, a plurality of sets of the first arrays 10 includes an inner first array 10X and another outer first array 10Y. In such an embodiment, the pitch noise can be reduced to improve the noise performance as well as the steering stability.

In FIG. 11, the inner first array 10X consists of a plurality of first lateral groove-shaped elements 7X and a plurality of second lateral groove-shaped elements 8X. The first lateral groove-shaped elements 7X are formed on the first land portion 101 on the second land portion 102 side. The second lateral groove-shaped elements 8X are formed on the second land portion 102 on the first land portion 101 side. In FIG. 11, the first lateral groove-shaped elements 7X and the second lateral groove-shaped elements 8X forming the inner first array 10X are blacked out to aid understanding.

The outer first array 10Y consists of a plurality of first lateral groove-shaped elements 7Y and a plurality of second lateral groove-shaped elements 8Y The first lateral groove-shaped elements 7Y are formed on a region of the first land portion 101, which region is away from the second land portion 102. The second lateral groove-shaped elements 8Y are formed on a region of the second land portion 102, which region is away from the first land portion 101. In FIG. 11, the first lateral groove-shaped elements 7Y and the second lateral groove-shaped elements 8Y forming the outer first array 10Y are not blacked out to make it easier to distinguish them from the inner first array 10X.

When a plurality of sets of the first arrays 10 is provided on the land portions consisting of the first land portion 101 and the second land portion 102, the improvement of noise performance can be achieved by reducing pitch noise, as in the previous embodiments.

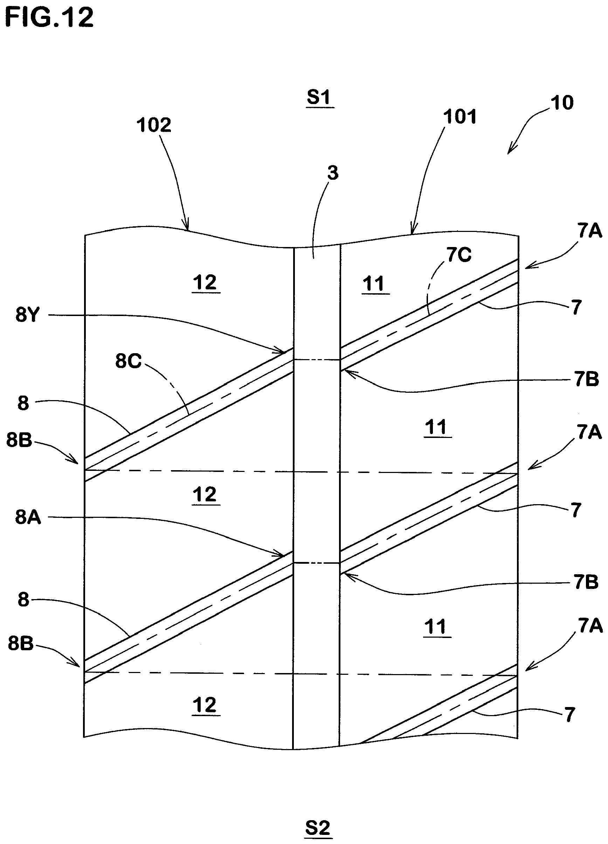

FIG. 12 illustrates another modification of the lateral groove-shaped elements. In this modification, the lateral groove-shaped elements 7 are lateral grooves (inclined grooves). Specifically, the lateral groove-shaped elements of the first array 10 according to the example, for example, include a plurality of first lateral groove-shaped elements 7 and a plurality of second lateral groove-shaped elements 8, and these elements are configured as a plurality of lateral grooves. Thus, the lateral groove-shaped elements according to the present invention (e.g., the first lateral groove-shaped elements 7 and the second lateral groove-shaped elements 8) are not limited to sipes.

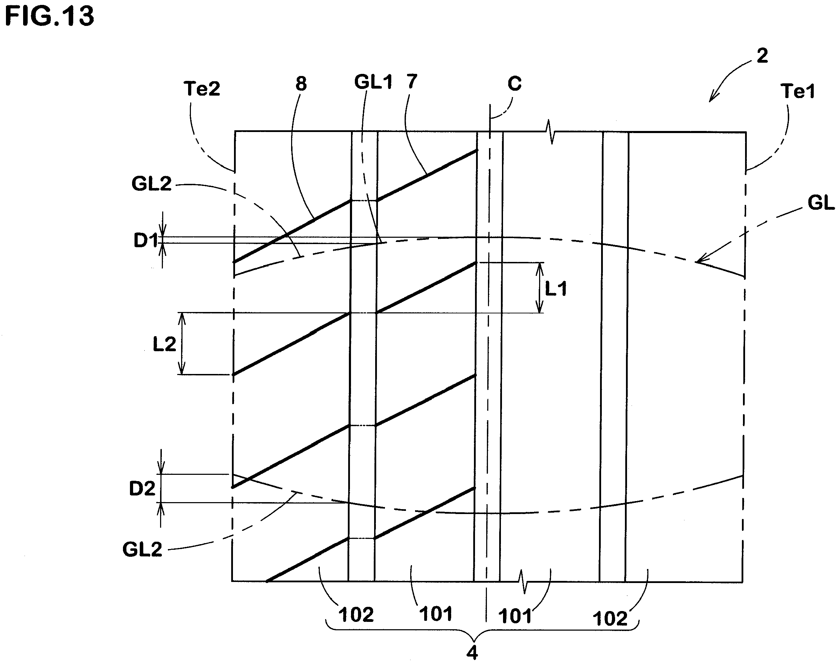

FIG. 13 shows a ground contact patch GL of the tread portion 2 of FIG. 1 under the normal loaded state with a virtual line. A tire circumferential length D1 of an edge GL 1 of the ground contact patch GL that crosses the first land portion 101 is equal to or less than 20% of the circumferential length L1 of one of the plurality of first lateral groove-shaped elements 7. Similarly, a tire circumferential length D2 of an edge GL2 of the ground contact patch GL that crosses the second land portion 102 is equal to or less than 20% of the circumferential length L2 of one of the plurality of second lateral groove-shaped elements 8.

The inventors focused on the relationship between the circumferential lengths L1 and L2 of the first lateral groove-shaped elements 7 and the second lateral groove-shaped elements 8, respectively, and the tire circumferential lengths D1 and D2 of the edges GL1 and GL2, respectively, of the ground contact patch GL in order to obtain a higher noise improvement effect. In order to obtain the expected effect of the first array 10 on the suppression of impact force fluctuations, it may be most effective if the edges GL1 and GL2 of the ground contact patch GL crossing the land portions 101 and 102, respectively, are parallel to the tire axial direction. However, in actual tires, the edges GL1 and GL2 of the ground contact patch GL tends to be an arc-shape, as shown in FIG. 13. Even in such an actual case, when the tire circumferential lengths D1 and D2 of the edges GL1 and GL2, respectively, of the ground contact patch GL are equal to or less than 20% of the circumferential lengths L1 and L2 of one of the first lateral groove-shaped elements 7 and one of the second lateral groove-shaped elements 8, respectively, the deviation of the ground contact timing between the opposing circumferential edges of the land portions can be as small as possible. This can help further reduce the impact force fluctuations and further improve the noise performance. In some more preferred aspects, the tire circumferential length D1 is preferably equal to or less than 10%, more preferably equal to or less than 5%, of the circumferential length L1 of one of the first lateral groove-shaped elements 7. Similarly, the tire circumferential length D2 is preferably equal to or less than 10%, more preferably equal to or less than 5%, of the circumferential length L2 of one of the second lateral groove-shaped elements 8.

Although some embodiments of the present invention have been described above, the embodiments and the specific configurations represented in the drawings are for the purpose of understanding the contents of the present invention, and the present invention is not limited to the specific configurations shown in the figures.

[Example]

In order to confirm the effects of the present invention, pneumatic radial tires for passenger car with a tire size of 195/65R15 91H (mounted rim: 15x6.0, internal pressure: 230 kPa) based on the specifications in Table 1 were prepared, and the noise performance were tested. Note that the first land portion was applied to one of the crown land portions, and the second land portion was applied to one of the shoulder land portions adjacent thereto. Example has the first array shown in FIG. 6. On the other hand, Reference has an arrangement of lateral groove-shaped elements based on the pattern of FIG. 1. However, the first lateral groove-shaped elements overlap the respective second lateral groove-shaped elements in the tire circumferential direction about 50% of the groove lengths. The first lateral groove-shaped elements and the second lateral groove-shaped elements have an angle of 75 degrees with respect to the tire circumferential direction. The groove width (sipe width) is 2 mm. The internal structure of each tire is identical. The test procedure is as follows.

Noise performance test (actual vehicle evaluation):
Test tires were mounted on the four wheels of a test vehicle (front-wheel drive vehicle with a displacement of 2000 cc). Then, the test vehicle was run on a dry road surface at a speed of 40 to 100 km/h, and the maximum sound pressure of the noise at this time was measured. The test results are indicated in Table 1 using an index with the sound pressure of Reference being 100, and the smaller the value, the smaller the running noise (lower the sound pressure) and the better the noise performance.

Table 1 shows the test results.

[Table 1]

|  | Reference | Example |
|---|---|---|
| Angle $\theta 11$ of first inclined portions (deg.) | 75 | 75 |
| Length of first inclined portions (mm) | 25 | 5 |
| Width of first inclined portions (mm) | 2 | 2 |
| Angle $\theta 12$ of second inclined portions (deg.) | - | 37 |
| Length of second inclined portions (mm) | - | 17 |
| Width of second inclined portions (mm) | - | 3 |
| Angle $\theta 23$ of third inclined portions (deg.) | - | 40 |
| Length of third inclined portions (mm) | - | 12 |
| Width of third inclined portions (mm) | - | 3 |
| Angle $\theta 24$ of fourth inclined portions (deg.) | - | 75 |
| Length of fourth inclined portions (mm) | - | 8 |
| Width of fourth inclined portions (mm) | - | 2 |
| Angle $\theta 25$ of fifth inclined portions (deg.) | - | 60 |
| Length of fifth inclined portions (mm) | - | 8 |
| Width of fifth inclined portions (mm) | - | 2.5 |
| Nose performance (index) | 100 | 80 |

As a result of the test, it is confirmed that Example has improved noise performance compared to Reference.

[Additional note]

The present invention includes the following aspects.

[Note 1]

A tire comprising:

a tread portion comprising a plurality of circumferential grooves extending continuously in a tire circumferential direction and a plurality of land portions divided by the plurality of circumferential grooves, wherein

the plurality of land portions is provided with at least one set of a plurality of lateral groove-shaped elements inclined with respect to a tire axial direction and the tire circumferential direction,
each of the plurality of lateral groove-shaped elements comprises a first end located on a first side in the tire circumferential direction and a second end located on a second side in the tire circumferential direction,
the at least one set of the plurality of lateral groove-shaped elements is arranged in a first array over an entire circumference of the tire,
the first array is such that in each of all pairs of two lateral groove-shaped elements adjacent to each other in the tire circumferential direction of the plurality of lateral groove-shaped elements, the first end of one of the two lateral groove-shaped elements is located at a same position in the tire circumferential direction as the second end of the other one of the two lateral groove-shaped elements, and
two lateral groove-shaped elements included in at least one pair of the all pairs are formed on different land portions from one another.

[Note 2]

The tire according to note 1, wherein
the plurality of lateral groove-shaped elements comprises a plurality of sipes having a width equal to or less than 2 mm.

[Note 3]

The tire according to note 1 or 2, wherein
the plurality of lateral groove-shaped elements comprises a plurality of grooves having a width greater than 2 mm.

[Note 4]

The tire according to any one of notes 1 to 3, wherein
two lateral groove-shaped elements included in at least one pair of all pairs are inclined in a same direction as each other with respect to the tire circumferential direction.

[Note 5]

The tire according to any one of notes 1 to 4, wherein
two lateral groove-shaped elements included in at least one pair of all pairs are inclined in different directions from one another with respect to the tire circumferential direction.

[Note 6]

The tire according to any one of notes 1 to 5, wherein
at least one of the plurality of lateral groove-shaped elements traverses one of the land portions completely in the tire axial direction.

[Note 7]

The tire according to any one of notes 1 to 6, wherein
at least one of the first end and the second end of at least one of the plurality of lateral groove-shaped elements terminates within one of the land portions to form a closed end.

[Note 8]

The tire according to any one of notes 1 to 7, wherein

the plurality of lateral groove-shaped elements comprises at least one first lateral groove-shaped element and at least one second lateral groove-shaped element,
one of the at least one first lateral groove-shaped element and the at least one second lateral groove-shaped element has an angle with respect to the tire circumferential direction is greater than that of an angle with respect to the tire circumferential direction of the other one of the at least one first lateral groove-shaped element and the at least one second lateral groove-shaped element, and
the one of the at least one first lateral groove-shaped element and the at least one second lateral groove-shaped element has a width smaller than a width of the other one of the at least one first lateral groove-shaped element and the at least one second lateral groove-shaped element.

[Note 9]

The tire according to any one of notes 1 to 8, wherein

in a ground contact patch of the tire under a normal loaded state in which the tire is mounted on a standard wheel rim with a standard pressure and is in contact with a flat surface with a zero camber angles under a standard tire load, a tire circumferential length of an edge of the ground contact patch that crosses one of the land portions that is provided with some of the lateral groove-shaped elements forming the first array is equal to or less than 20% of a tire circumferential length of one of the plurality of lateral groove-shaped elements formed on the one of the land portions.

[Note 10]

The tire according to any one of notes 1 o 9, wherein
the at least one set of the plurality of lateral groove-shaped elements comprises two or more sets of a plurality of lateral groove-shaped elements arranged in the first array.

[Note 11]

The tire according to any one of notes 1 to 10, wherein
two lateral groove-shaped elements included in each of all pairs are formed on different land portions from one another.

[Note 12]

The tire according to any one of notes 1 to 10, wherein
two lateral groove-shaped elements included in at least one pair of all pairs are formed on a same land portion of the plurality of land portions.

[Note 13]

The tire according to any one of notes 1 to 12, wherein
the plurality of lateral groove-shaped elements arranged in the first array is formed over two land portions of the plurality of land portions.

[Note 14]

The tire according to note 13, wherein
the two land portions are adjacent to each other via one circumferential groove of the plurality of circumferential grooves.

[Note 15]

The tire according to note 13, wherein
two or more circumferential grooves of the plurality of circumferential grooves are arranged between the two land portions.

[Note 16]

The tire according to any one of notes 1 to 12, wherein
the plurality of lateral groove-shaped elements arranged in the first array is formed over three or more land portions of the plurality of land portions.

**Claims**

1. A tire comprising:

   a tread portion comprising a plurality of circumferential grooves extending continuously in a tire circumferential direction and a plurality of land portions divided by the plurality of circumferential grooves, wherein

   the plurality of land portions is provided with at least one set of a plurality of lateral groove-shaped elements inclined with respect to a tire axial direction and the tire circumferential direction,
   each of the plurality of lateral groove-shaped elements comprises a first end located on a first side in the tire circumferential direction and a second end located on a second side in the tire circumferential direction,
   the at least one set of the plurality of lateral groove-shaped elements is arranged in a first array over an entire circumference of the tire,
   the first array is such that in each of all pairs of two lateral groove-shaped elements adjacent to each other in the tire circumferential direction of the plurality of lateral groove-shaped elements, the first end of one of the two lateral groove-shaped elements is located at a same position in the tire circumferential direction as the second end of the other one of the two lateral groove-shaped elements, and
   two lateral groove-shaped elements included in at least one pair of the all pairs are formed on different land portions from one another.

2. The tire according to claim 1, wherein
   the plurality of lateral groove-shaped elements comprises a plurality of sipes having a width equal to or less than 2 mm.

3. The tire according to claim 1, wherein
   the plurality of lateral groove-shaped elements comprises a plurality of grooves having a width greater than 2 mm.

4. The tire according to claim 1, wherein
   two lateral groove-shaped elements included in at least one pair of all pairs are inclined in a same direction as each other with respect to the tire circumferential direction.

5. The tire according to claim 1, wherein
   two lateral groove-shaped elements included in at least one pair of all pairs are inclined in different directions from one another with respect to the tire circumferential direction.

6. The tire according to claim 1, wherein
   at least one of the plurality of lateral groove-shaped elements traverses one of the land portions completely in the tire axial direction.

7. The tire according to claim 1, wherein
   at least one of the first end and the second end of at least one of the plurality of lateral groove-shaped elements terminates within one of the land portions to form a closed end.

8. The tire according to claim 1, wherein

   the plurality of lateral groove-shaped elements comprises at least one first lateral groove-shaped element and at least one second lateral groove-shaped element,
   one of the at least one first lateral groove-shaped element and the at least one second lateral groove-shaped element has an angle with respect to the tire circumferential direction is greater than that of an angle with respect to the tire circumferential direction of the other one of the at least one first lateral groove-shaped element and the at least one second lateral groove-shaped element, and

the one of the at least one first lateral groove-shaped element and the at least one second lateral groove-shaped element has a width smaller than a width of the other one of the at least one first lateral groove-shaped element and the at least one second lateral groove-shaped element.

9. The tire according to claim 1, wherein

   in a ground contact patch of the tire under a normal loaded state in which the tire is mounted on a standard wheel rim with a standard pressure and is in contact with a flat surface with a zero camber angles under a standard tire load,
   a tire circumferential length of an edge of the ground contact patch that crosses one of the land portions that is provided with some of the lateral groove-shaped elements forming the first array is equal to or less than 20% of a tire circumferential length of one of the plurality of lateral groove-shaped elements formed on the one of the land portions.

10. The tire according to claim 1, wherein
    the at least one set of the plurality of lateral groove-shaped elements comprises two or more sets of a plurality of lateral groove-shaped elements arranged in the first array.

11. The tire according to claim 1, wherein
    two lateral groove-shaped elements included in each of all pairs are formed on different land portions from one another.

12. The tire according to claim 1, wherein
    two lateral groove-shaped elements included in at least one pair of all pairs are formed on a same land portion of the plurality of land portions.

13. The tire according to claim 1, wherein
    the plurality of lateral groove-shaped elements arranged in the first array is formed over two land portions of the plurality of land portions.

14. The tire according to claim 13, wherein
    the two land portions are adjacent to each other via one circumferential groove of the plurality of circumferential grooves.

15. The tire according to claim 13, wherein
    two or more circumferential grooves of the plurality of circumferential grooves are arranged between the two land portions.

16. The tire according to claim 1, wherein
    the plurality of lateral groove-shaped elements arranged in the first array is formed over three or more land portions of the plurality of land portions.

FIG.1

# FIG.2

# FIG.3

# FIG.4

# FIG.5

# FIG.6

# FIG.7

# FIG.8

# FIG.9

# FIG.10

S1

103    102    101    10

3    8A    3

7A
7
7B

9A
9
8
8B
9B

9    7

9    7

8

S2

# FIG.11

# FIG.12

EP 4 253 091 A1

# FIG.13

Europäisches
Patentamt

European
Patent Office

Office européen
des brevets

# EUROPEAN SEARCH REPORT

Application Number

EP 23 15 8318

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 689 643 A1 (SUMITOMO RUBBER IND [JP]) 5 August 2020 (2020-08-05) * abstract; figures * ----- | 1-16 | INV. B60C11/03 B60C11/12 |
| A | EP 3 118 025 A1 (SUMITOMO RUBBER IND [JP]) 18 January 2017 (2017-01-18) * abstract; figures * ----- | 1-16 | |
| A | EP 3 069 900 A1 (SUMITOMO RUBBER IND [JP]) 21 September 2016 (2016-09-21) * abstract; figures * ----- | 1-16 | |
| A | EP 2 781 374 A2 (SUMITOMO RUBBER IND [JP]) 24 September 2014 (2014-09-24) * abstract; figures * ----- | 1-16 | |

TECHNICAL FIELDS
SEARCHED (IPC)

**B60C**

The present search report has been drawn up for all claims

| Place of search | Date of completion of the search | Examiner |
|---|---|---|
| Munich | 12 June 2023 | Avisse, Marylène |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
..................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 15 8318

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2023

| Patent document cited in search report | | | Publication date | Patent family member(s) | | | Publication date |
|---|---|---|---|---|---|---|---|
| EP | 3689643 | A1 | 05-08-2020 | CN | 111483272 | A | 04-08-2020 |
| | | | | EP | 3689643 | A1 | 05-08-2020 |
| | | | | JP | 7206952 | B2 | 18-01-2023 |
| | | | | JP | 2020117149 | A | 06-08-2020 |
| | | | | US | 2020238766 | A1 | 30-07-2020 |
| EP | 3118025 | A1 | 18-01-2017 | CN | 106347034 | A | 25-01-2017 |
| | | | | EP | 3118025 | A1 | 18-01-2017 |
| | | | | JP | 6467309 | B2 | 13-02-2019 |
| | | | | JP | 2017024454 | A | 02-02-2017 |
| | | | | US | 2017015143 | A1 | 19-01-2017 |
| EP | 3069900 | A1 | 21-09-2016 | CN | 105745092 | A | 06-07-2016 |
| | | | | EP | 3069900 | A1 | 21-09-2016 |
| | | | | JP | 5886816 | B2 | 16-03-2016 |
| | | | | JP | 2015110394 | A | 18-06-2015 |
| | | | | US | 2016297254 | A1 | 13-10-2016 |
| | | | | WO | 2015083474 | A1 | 11-06-2015 |
| EP | 2781374 | A2 | 24-09-2014 | BR | 102013023042 | A2 | 04-11-2014 |
| | | | | CN | 104057785 | A | 24-09-2014 |
| | | | | EP | 2781374 | A2 | 24-09-2014 |
| | | | | JP | 5715655 | B2 | 13-05-2015 |
| | | | | JP | 2014184828 | A | 02-10-2014 |
| | | | | US | 2014283967 | A1 | 25-09-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022054343 A

- JP 2020168946 A